# EUROPEAN PATENT APPLICATION

(11) **EP 4 538 644 A1**
(43) Date of publication of application: **16.04.2025**
(21) Application number: 24202095.6
(22) Date of filing: 24.09.2024
(51) Int. Cl.: G01C 21/00

(54) **TILING BASED APPROACH FOR UNIFIED DESTINATION ENTRY**

(30) Priority: 11.10.2023 US 202363543552 P
(71) Applicant: Cerence Operating Company, Burlington, MA 01803 (US)
(72) Inventor: MARTENS, Gaëtan, Merelbeke (BE); DUCATELLE, Frederick, Merelbeke (BE); VERSCHAERE, Stijn, Merelbeke (BE)
(74) Representative: Taruttis, Tilman

(57) **Abstract**

In an infotainment system of a vehicle, a mass storage unit stores map data and context data. The map data comprises geographic information about a geographic area around the vehicle and the context data comprises location-dependent context information about the geographic area for use when engaging in speech interaction with an occupant of the vehicle. The context data includes subsets of context data, each of which is pertinent to a different geographic area. A memory manager copies these subsets of context data into a dynamic memory based on the vehicle's movement.

## Description

### Background

The invention relates to electronic devices for providing location-dependent information.

A mapping system receives location information from a global-positioning system and displays it on a dynamically changing map on a screen in the vehicle. As the location changes, the map also changes.

The mapping system's ability to map on the screen arises from its access to a monolithic data structure that stores "map data." This data structure is typically quite large. As a result, it is known to load into memory only that portion of the map data that is likely to be of interest to a user.

In many cases, the user would like to interact with the map data, for example by specifying a location or by asking a question about something shown on the map. For a user who is on foot, this is often carried out by typing. In those cases in which the user is driving, this is most conveniently done using a speech interface.

The map data includes only a limited amount of information that the speech interface can draw upon to support such interactions. Accordingly, it is useful to provide additional data to be drawn upon by the speech interface when interacting with a user who is also interacting with map data.

### Summary

The invention addresses use of context data that can be drawn upon by a speech interface to provide additional information concerning the map data. Such context data is sometimes referred to as "unified destination entry data" or "UDE data." The invention is suitable for use by a digital assistant, such as an automotive assistant that executes in a vehicle or by a mobile assistant that executes on a mobile device.

It has been discovered that a user's location at the time that the user engages in a speech interaction provides context on how that speech should be interpreted. This is particularly true when the speech refers to a feature in the map data. According to the invention, the user's location at the time the question is asked provides context for disambiguating speech.

As an example, if a user asks, "Tell me about the Statute of Liberty," the answer will depend on whether the user is parked near New York harbor or near the Luxembourg Gardens in Paris, where a smaller version of the statue can be found. As a result, the speech interface's response will be informed by the location at which the question was asked.

In some cases, location affects pronunciation of local names. As an example, the name of the river "Thames" is pronounced one way in London and another way in New London, Connecticut. In such cases, the speech interface's response will have a location-appropriate pronunciation.

It has also been discovered that in most cases, user queries that concern geographical features concern features that are within about five-hundred kilometers from their current location, with the probability of such a query diminishing with distance from the location.

Accordingly, the invention contemplates partitioning the context data into units or "tiles" that are loaded into memory on an as-needed basis. In such cases, the assistant loads the tile that contains the user's location (hereafter referred to as the "local tile") and a set of "neighborhood tiles." Each neighborhood tile has at least one point that is closer to the user's location than a specified threshold. These tiles are dynamically loaded at runtime so that the context data that is most likely to be required, based on the user's location, will be available.

For each tile, there corresponds a set of addresses and points-of-interest. By using these sets of addresses and points-of-interest, it becomes possible to create information modules for use by the speech interface. Such information includes finite state transducer context information and a language model for the automatic speech recognition unit, a set of gazetteers for use by the natural language understanding unit, and database content for navigation or other services, among which are reasoning services. The foregoing information is keyed to addresses and points-of-interest in the region encompassed by the relevant tile.

In operation, the user's known location is used to identify those tiles that have at least one point that is within a particular distance from the user's location and loads only those tiles into memory dynamically at runtime. This distance is set either by the user, by the maximum amount of memory available for loading tiles, or by the number of tiles required to cover a designated area of interest.

In some embodiments, there exist tiles that cover regions that are further away from the user than the first loading-distance. Such tiles are referred to herein as "remote tiles." Unless these remote tiles are also loaded, the speech interface will be unable to use information contained therein. However, loading these remote tiles at runtime would demand considerable memory because the area to be covered increases as the square of the distance from the user.

The invention exploits these features by decomposing a remote tile into plural "overlay tiles," each of which includes some but not all of the information from the original remote tile. This amounts to a decomposition of the original remote tile into components, selected ones of which can be reassembled to provide different amounts of information and to require different amounts of memory.

Tiles and overlay tiles provide a way to inject information from regions of interest according to their relevance, with relevance being from the user's location, contextual information, user history, and user profiles. This flexibility allows the digital assistant to accommodate footprint restrictions that exist on embedded platforms and allows the optimal use of information that is relevant for ongoing tasks.

In one aspect, the invention features an apparatus for optimizing memory usage. Such an apparatus includes a digital assistant, a speech interface, a dynamic memory, a memory manager, and a mass storage unit that stores map data and context data. The map data comprises geographic information about geographic areas in a user's vicinity. These geographic areas include first and second geographic areas. The context data comprises location-dependent context information about the geographic areas around the user for use by the speech interface when engaging in speech interaction with the user. This context data comprises a first subset of the context data and a second subset of the context data. The dynamic memory that stores a copy of the first subset of the context data. The memory manager, in response to the user's velocity, replaces the copy of the first subset of the context data with a copy of information from the second subset of the context data.

Embodiments include those in which the user is in a vehicle and the digital assistant is an automotive assistant that is executing in an infotainment system of the vehicle. In such embodiments, the apparatus attempts to optimize memory usage in the vehicle's infotainment system.

Embodiments include those in which the first and second subsets of the context data contain information pertinent to the first and second geographic areas, respectively and those in which the first and second subsets of the context data contain information pertinent to the first geographic area and the first and second subsets have different amounts of that information, those in which the second subset of the context data omits information that was in the first subset of context data, and those in which the first subset of the context data omits information about the first geographic area that is in the second subset of context data.

In some embodiments, the mass storage unit stores first and second tiles that comprise the first and second subsets of the context data, respectively. In such embodiments, the first tile has context information about the first geographic area and the second tile has context information about the second geographic area.

In some embodiments, the apparatus further includes an overlay operator. Among these are embodiments in which the overlay operator receives, from the mass storage unit, a context tile that includes the first subset of the context data and returns a plurality of overlay tiles, each of which includes a corresponding proper subset of the first subset of the context data.

Also among the embodiments that include an overlay operator are those in which the overlay operator receives, from the mass storage unit, a context tile that includes the first subset of the context data. as well as two or more overlay tiles that have been constructed from the context tile. Each of these overlay tiles includes some information from the context tile. In such embodiments intersections of the overlay tiles in an information space yield a null set. These overlay tiles therefore do not overlap.

Other embodiments that include an overlay operator include those in which the overlay operator that receives, from the mass storage unit, a context tile and first and second overlay tiles that have been derived from that context tile. In such embodiments, the context tile includes first information and second information. The first information is information about first features within the first geographic area and the second information is information about second features within the first geographic area. These first features have a popularity score in a first range of popularity scores while the second features have a popularity score in a second range of popularity scores. The first information is included in the first overlay tile and omitted from the second information from the first overlay tile. Conversely, the second information is included in the second overlay tile and omitted from the first information from the second overlay tile.

Still other embodiments that include the overlay operator are those in which the overlay operator receives a context tile and overlay tiles from the mass storage unit. The overlay tiles, which include first and second overlay tiles, correspond to different overlay levels. In such embodiments, the context tile includes first information concerning first features and second information concerning second features, the first features being within a first administrative region and the second features being within a second administrative region. The first overlay tile includes the first information and omits the second information. Conversely, the second overlay tile includes the second information but omits the first information.

In still other embodiments, the mass storage unit stores overlay tiles that collectively include all information in the second subset of the context data. Each of these overlay tiles has less than all information in the second subset of context data. The copy of the information from the second subset consists of fewer than all overlay tiles for the second subset. Among these are embodiments in which an overlay operator loads some but not all of the overlay tiles. This permits construction of a superposition of some but not all of the overlay tiles.

In other embodiments, the mass storage unit stores a plurality of overlay tiles corresponding to the first subset of the context data. Each of the overlay tiles includes a proper subset of the first subset of the context data. Among these are embodiments in which the memory manager loads, into the dynamic memory, fewer than all of the overlay tiles. This results in a superposition of overlay tiles in which the number of tiles in the superposition depends on a distance between the user and the first area. Also among these embodiments are those in which the memory manager loads, into the dynamic memory, a superposition of fewer than all of the overlay tiles in which the number of tiles in the superposition increases as a distance between the user and the first area decreases and/or decrease as that distance decreases, for example as a result of a vehicle carrying that user moving towards or away from the first area or as a result of the user walking towards or away from the first area.

In another aspect, the invention features a method including causing a digital assistant to execute in a movable device, causing a speech interface to execute in the device, and to be in communication with the digital assistant, storing map data and context data in a mass-storage unit, storing a copy of a first subset of the context data in a dynamic memory, and optimizing memory usage in the infotainment system. The act of optimizing the memory usage includes responding to information concerning a velocity of the device, causing a memory manager that is installed therein to replace a copy of the first subset of context data with a copy of information from a second subset of the context data, the second subset having been stored in the mass storage unit. The map data includes geographic information about geographic areas around the device. These geographic areas include first and second geographic areas. The context data includes location-dependent context information about the geographic areas around for use by the digital assistant and by the speech interface when engaging in speech interaction with a user of the device.

Practices of the method include those in which the user is in a vehicle and the digital assistant is an automotive assistant that is executing in an infotainment system of the vehicle. Such practices include attempting to optimize memory usage in the vehicle's infotainment system.

These and other features of the invention will be apparent from the following detailed description and the accompanying figures, in which:

### Description of Drawings

FIG. 1 shows an overlay operator in an infotainment system of a vehicle; and
FIG. 2 shows different kinds of tiles on a map. 1.

### Detailed Description

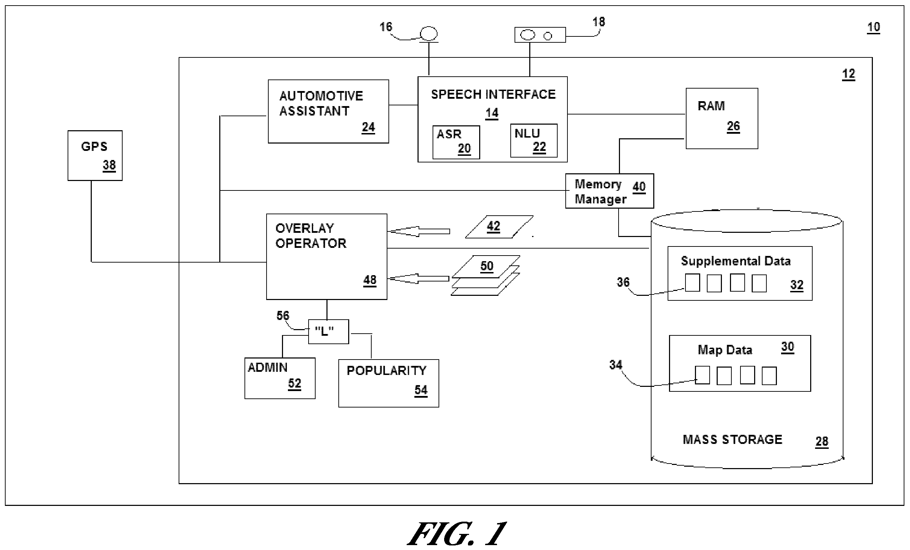

FIG. 1 shows a vehicle 10 having an infotainment system 12 in which a speech interface 14 receives voice input through a microphone 16 and provides voice output through a loudspeaker 18. The speech interface 14 features an automatic speech-recognition system 20 and a natural-language understanding unit 22.

As the vehicle 10 moves, it is not uncommon for an occupant thereof to use the microphone 16 to ask questions, particularly about features in the vehicle's environment. The speech interface 14 provides spoken answers to these questions through the loudspeaker 18.

Since the vehicle 10 moves, the local features about which questions are likely to be asked will constantly change. As a result, the information required to answer these questions also changes.

An automotive assistant 24 that executes in the infotainment system 12 fields questions from the vehicle's occupant. In doing so, it may require information concerning local features. Such information is stored in a dynamic memory 26.

The dynamic memory 26 is a limited resource. Accordingly, it is preferable to avoid storing therein more information than necessary. Instead, the dynamic memory 26 obtains subsets of information from a mass storage unit 28 on an as-needed basis. There are two kinds of information in the mass storage unit 28: map data 30 and context data 32.

The map data 30 shows geographic information about a geographic area. This map data 30 is divided into map tiles 34 that show geographic information for a limited geographic area. The geographic information about a region includes such information as street names and positions of named entities that are located in the geographic area.

The context data 32 contain location-specific information for use by the speech-interface 14 and the automotive assistant 24 for interacting with a user of the vehicle 10. Such information may include facts that are either not present in the map data 30 or otherwise inaccessible to the speech-interface 14. Examples include historical information, dimensions (e.g., the height of a building or the mass of a bridge), operating hours, pronunciation of a place name, restrictions on entry (e.g., restrictions on entering a gated community), and the like. This information, like that in the map data 30, is location specific.

Like the map data 30, the context data 32 is divided into context tiles 36. Each context tile 36 includes context information for a limited geographic area. In some embodiments, it is convenient to have one context tile 36 for each map tile 34.

The vehicle 10 includes a GPS 38 that provides the vehicle's location in real time to the automotive assistant 24. This enables the automotive assistant 24 to use the vehicle's location as context for answering questions posed by a user through the speech interface 14. This enables the automotive assistant 24 to answer the same question in different ways depending on the vehicle's location.

The GPS 38 also provides the vehicle's location in real time to a memory manager 40. In response to changes in the vehicle's location, the memory manager 40 replaces map tiles 34 and context tiles 36 in the dynamic memory 26 with new map tiles 34 and new context tiles 36 from the mass storage unit 28. The map tiles 34 and context tiles 36 contain proper subsets of the map data 30 and the context data 32, respectively.

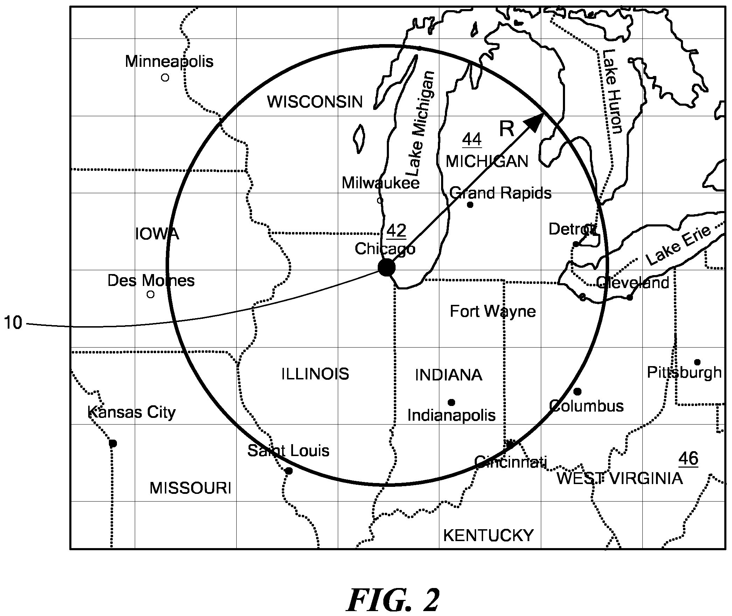

FIG. 2 shows three kinds of context tiles 36: a local tile 42, neighborhood tiles 44, and remote tiles 46.

The local tile 38 contains the vehicle's location. The neighborhood tiles 40 contain at least one point that is within a particular distance from the vehicle's location. Given this ontology, the local tile 38 is also a neighborhood tile 40. The remote tiles 42 are context tiles 36 that are not neighborhood tiles 40.

These various kinds of context tile 36 are all structurally identical. The terms are used only in relation to the vehicle's location. Thus, as a vehicle approaches a remote tile 42, it will eventually turn into a neighborhood tile 40 and then ultimately into a local tile 38 upon the vehicle's arrival.

However, context tiles 36 do differ from map tiles 34. In many cases, context tiles 36 contain considerable amounts of information, in many cases, far more than a map tile 34 that covers a similar region. As a result, a context tile 36 consumes considerable dynamic memory 26.

It has been discovered that the likelihood of requiring information from a particular context tile 36 decreases with the context tile's distance from the local tile 42. To avoid consuming excessive amounts of dynamic memory 26 while still providing at least some information concerning regions far from the vehicle 10, some embodiments include an overlay operator 48, as shown in FIG. 1.

The overlay operator 48 receives a context tile 36 from the mass storage unit 28. It also receives two or more overlay tiles 50 that have been stored in the mass storage unit 28. To avoid latency and to conserve local computing resources, the context tiles 36 and the overlay tiles 50 are typically created a priori on a tiling system that is remote from the vehicle, These overlay tiles 50 are then stored in the mass storage unit 28.

Each context tile 36 thus spawns a set of overlay tiles 50. Each overlay tile 50 contains some but not all of the information in the context tile 36 from which it was spawned. In addition, the overlay tiles 50 contain different information from each other. The overlay tiles 50 are thus orthogonal to each other in information space. However, since all overlay tiles 50 correspond to the same context tile 36, they overlap each other to cover the same geographic area. Thus, the overlay tiles 50 overlay each other in physical space but are orthogonal to each other in the information space.

The memory manager 40 uses the vehicle's location to create superpositions of overlay tiles 50. For context tiles 36 near the vehicle, the memory manager 40 uses most or all of the overlay tiles 50 and thus endows the context tile 36 with considerable information. On the other hand, for context tiles 36 that are further from the vehicle's location, the memory manager 40 forms a superposition with fewer overlay tiles 50. For those context tiles 36 that are furthest from the vehicle, i.e., for remote tiles 42, a superposition consists of two overlay tiles 50, one of which is a null overlay tile. It should be apparent from elementary set theory that a superposition of an overlay tile 50 with a null overlay tile is structurally and functionally equivalent to using only one overlay tile 50 and that the null overlay tile is introduced primarily to permit consistency in use of the word "superposition."

The information content in the resulting superposition of overlay tiles 50 consists of a subset of the information that was in the original context tile 36 from whence the overlay tiles 50 were derived. Since the superposition is smaller than the context tile 36 was to begin with, this reduces consumption of the dynamic memory 26 while retaining at least some information concerning regions that are remote from the vehicle 10.

The memory manager 40 constructs superpositions of varying "density." A superposition's "density" depends on how many overlay tiles 50 were used in its construction. In the limit, when a superposition uses all available overlay tiles 50, the result is equivalent to the original context tile 36 from which the overlay tiles 50 were spawned.

In some embodiments, the memory manager 40 constructs superpositions that decrease in density as the distance from the local tile 42 decreases. This is advantageous because it has been discovered that the likelihood of a user requiring information about a region decreases as the region's distance from the user's vehicle 10 increases.

In some embodiments, the metric used for measuring distance is one derived from the latitude and longitude of the vehicle 10 and some reference point on a context tile 36. For the case in which the latitude and longitude of the vehicle's position and the reference point differ by *Δφ* and *Δλ*, respectively and the relevant latitudes are *φ₁* and *φ₂*, a suitable formula is one in which the distance between them is the product of the Earth's radius and twice the arctangent of the square root of (1-*a*)/*a*, with "*a*" being given by *sin²(Δϕ*/*2)* + *cosϕ₁ ·cosϕ₂* · *sin²(Δλ*/*2).* For cases in which the differences in angle are not too great, a simpler formula can be used that relies on small-angle approximations to eliminate the sine functions. In other cases, the distance is a Manhattan distance.

The construction of overlay tiles 50 relies primarily on three kinds of information: administrative information 52, popularity information 54, and overlay levels 56.

The administrative information 52 arises because addresses on a map are structured into a hierarchy of administrative levels. Examples of these administrative levels are "state," "province," "prefecture," or "oblast" at a high level and "county," "city," "district," or "street" at a more local level. While the names of these administrative levels change from one location to another, the net result is a hierarchical tree of administrative levels.

The popularity information 54 comes from popularity scores for the various points-of-interest. These popularity scores, which are acquired by collecting data on user activity and drawing inferences based on that activity, are indicative of an extent to which a point-of-interest or another location is important.

Each overlay tile 50 corresponds to an overlay level 56. The number of overlay levels 56 thus defines the dimensionality of the information space.

Each overlay level 56 has an associated administrative level from the administrative information 52 and an associated range of popularities from the popularity information 54. The information in an overlay tile 50 corresponding to a particular overlay level 56 is controlled by the popularity scores 54 and administrative information 52 assigned to that overlay level 56.

In operation, the overlay operator 48 receives a set of overlay levels 56 and a context tile 36. For each overlay level 56, the overlay operator 48 constructs an overlay tile 50. It does so by removing, from the context tile 36, all information except that assigned to that overlay level 56 that corresponds to the overlay tile 50 in question. This results in as many overlay tiles 50 as there are overlay levels 56, with each overlay tile 50 containing only information assigned to that overlay level 56. The result is effectively a decomposition of the original context tile 36 into components that are orthogonal in an information space, with each component represented by an overlay tile 50. Stated equivalently, give a set of overlay tiles 50 in which first and second overlay tiles 50 from the set include first and second information, respectively, the intersection of the first and second information is a null set.

An overlay tile 50 for a particular overlay level 56 includes only address information for a particular administrative level and information about only those points-of-interest whose popularity scores are within a particular range of popularity scores.

The ability to selectively combine different overlay tiles 50 means that as the distance between a context tile 36 and a vehicle 10 increases, it is possible to use, in place of the context tile 36, a superposition of selected ones of that context tile's overlay tiles 50 to obtain the correct amount and type of information required. Since there are as many superpositions as the factorial of the number of overlay levels 56, a great deal of flexibility is possible in constructing a superposition of overlay tiles 56 to be used as a substitute for a context tile 36.

In addition, it is possible to define different distances from the vehicle 10 and to assign an overlay level 56 to each distance, thereby gradually reducing the amount of information in remote tiles 46 as a function of the distance of the context tile 36 from the vehicle 10.

The invention has been described herein in the case in which the user's motion arises from the user's presence in a vehicle, such as an automobile. However, the subject matter described herein is agnostic to the user's source of locomotion. Accordingly, it is equally useful for a digital assistant that executes on a portable mobile device being carried by a user whose source of locomotion is other than a motor vehicle.

Having described the invention and a preferred embodiment thereof, what is claimed as new and secured by letters patent is:

## Claims

1. An apparatus for optimizing memory usage in an infotainment system in a vehicle, said apparatus comprising
an automotive assistant that executes in said infotainment system of said vehicle, a speech interface that executes in said infotainment system, said speech interface being in communication with said automotive assistant,
a mass storage unit that stores map data and context data,
wherein said map data comprises geographic information about geographic areas around said vehicle, said geographic areas comprising first and second geographic areas,
wherein said context data comprises location-dependent context information about said geographic areas around said vehicle for use by said automotive assistant and by said speech interface when engaging in speech interaction with an occupant of said vehicle,
wherein said context data comprises a first subset of said context data and a second subset of said context data,
a dynamic memory that stores a copy of said first subset of said context data, and
a memory manager that, in response to a velocity of said vehicle, replaces said copy of said first subset of said context data with a copy of information from said second subset of said context data.

2. The apparatus of claim 1, wherein said first and second subsets of said context data contain information pertinent to said first and second geographic areas, respectively.

3. The apparatus of claim 1, wherein said first and second subsets of said context data contain information pertinent to said first geographic area and said first and second subsets have different amounts of said information.

4. The apparatus of claim 1, wherein said second subset of said context data omits information that was in said first subset of context data.

5. The apparatus of claim 1, wherein said first subset of said context data omits information about said first geographic area that is in said second subset of context data.

6. The apparatus of claim 1, wherein said mass storage unit stores first and second tiles that comprise said first and second subsets of said context data, respectively, whereby said first tile has context information about said first geographic area and said second tile has context information about said second geographic area.

7. The apparatus of claim 1, further comprising an overlay operator that receives, from said mass storage unit, a context tile that includes said first subset of said context data and returns a plurality of overlay tiles, each of which includes a corresponding proper subset of said first subset of said context data.

8. The apparatus of claim 1, further comprising an overlay operator that receives, from said mass storage unit, a context tile that includes said first subset of said context data and a plurality of overlay tiles that have been constructed from said context tile, each of said overlay tiles including some information from said context tile, wherein intersections of said overlay tiles in an information space yield a null set.

9. The apparatus of claim 1, further comprising an overlay operator that receives, from said mass storage unit, a context tile, a first overlay tile, and a second overlay tile, wherein said context tile includes first information and second information, wherein said first information is information about first features within said first geographic area, wherein said second information is information about second features within said first geographic area, wherein said first features have a popularity score in a first range of popularity scores, wherein said second features have a popularity score in a second range of popularity scores, wherein said first overlay tile includes said first information and omits said second information, and wherein said second overlay tile includes said second information and omits said first information.

10. The apparatus of claim 1, further comprising an overlay operator that receives, from said mass storage unit, both a context tile unit and overlay tiles, said overlay tiles corresponding to different overlay levels and comprising first and second overlay tiles, wherein said context tile includes first information concerning first features and second information concerning second features, said first features being within a first administrative region and said second features being within a second administrative region, wherein said first overlay tile includes said first information, said second overlay tile includes said second information, said first overlay tile omits said second information, and said second overlay tile omits said first information.

11. The apparatus of claim 1, wherein said mass storage unit stores a plurality of overlay tiles that collectively include all information in said second subset of said context data, wherein each of said overlay tiles has less than all information in said second subset of context data, and wherein said copy of said information from said second subset consists of fewer than all overlay tiles for said second subset.

12. The apparatus of claim 1, wherein said mass storage unit stores a plurality of overlay tiles corresponding to said first subset of said context data, wherein each of said overlay tiles includes a proper subset of said first subset of said context data, and wherein said memory manager is further configured to load, into said dynamic memory, a superposition of fewer than all of said overlay tiles, wherein the number of tiles in said superposition depends on a distance between said vehicle and said first area.

13. The apparatus of claim 1, wherein said mass storage unit stores a plurality of overlay tiles corresponding to said first subset of said context data, wherein each of said overlay tiles includes a proper subset of said first subset of said context data, and wherein said memory manager is further configured to load, into said dynamic memory, a superposition of fewer than all of said overlay tiles, wherein the number of tiles in said superposition increases as a distance between said vehicle and said first area decreases.

14. A method comprising
causing an automotive assistant to execute in an infotainment system of a vehicle,
causing a speech interface to execute in said infotainment system and to be in communication with said automotive assistant,
storing map data and context data in a mass-storage unit,
storing a copy of a first subset of said context data in a dynamic memory, and optimizing memory usage in said infotainment system,
wherein optimizing said memory usage comprises, in response to information concerning a velocity of said vehicle, causing a memory manager that is installed in said vehicle to replace a copy of said first subset of context data with a copy of information from a second subset of said context data, said second subset having been stored in said mass storage unit,
wherein said map data comprises geographic information about geographic areas around said vehicle, and
wherein said context data comprises location-dependent context information about said geographic areas for use by said automotive assistant and by said speech interface when engaging in speech interaction with an occupant of said vehicle.
